# EUROPEAN PATENT SPECIFICATION

(11) **EP 4 040 015 B1**
(45) Date of publication and mention of the grant of the patent: **13.11.2024**
(21) Application number: 21156102.2
(22) Date of filing: 09.02.2021
(51) Int. Cl.: F16H 37/02, B60K 17/04, F16H 7/02, F16H 7/06, F16H 1/46, F16H 57/029, F16H 57/04

(54) **COMPACT EPICYCLIC GEARING**
KOMPAKTES PLANETENRAD
ENGRENAGE ÉPICYCLIQUE COMPACT

(43) Date of publication of application: 10.08.2022
(73) Proprietor: Tampieri, Alfredo, 40137 Bologna (IT)
(72) Inventor: Tampieri, Alfredo, 40137 Bologna (IT)
(74) Representative: Negrini, Elena

(56) References cited:
- CA-A1- 2 072 043
- CN-A- 108 591 405

## Description

### TECHNICAL FIELD

The present invention refers to the technical sector of motion reduction mechanisms interposed between driving shaft and shaft at reduced speed, in particular it refers to a compact epicyclic gearing.

### PRIOR ART

The known epicyclic reduction gearings have a sun gear, a planet carrier and an internal toothing outer gear. These elements transmit motion by means of a plurality of planet gears which are rotatably fixed to the planet carrier and which rotate with a fixed distance between centres.

Generally, to obtain a reduction ratio of the number of revolutions between the input shaft and the output shaft, the motion input is applied to the sun gear shaft and it is transmitted, by means of the plurality of planet gear, to the planet carrier provided with the output shaft.

Vice versa, when the epicyclic gearing is used to multiply the revolution numbers, the input motion is applied to the planet carrier shaft and the output motion is taken from the sun gear shaft.

Document US5074829 discloses an epicyclic gear with an input shaft kinematically connected to two planet gears supported by a planet carrier wherein each planet gear is made on a relative shaft supporting a relative pulley engaged by a first annular belt or chain which is engaged with a pinion keyed on the input shaft. The rotation of the input shaft is transmitted, through the belt or chain, to each pulley which set in rotation the relative shaft supporting the relative planetary gear driving into rotation the planet carrier having the axis coaxial with the input shaft axis. The torque support for the epicyclic gear is realized with a second chain on a sprocket of the planet gear, which is meshing with a sprocket that is fixed to the casing.

The document CA 1154982 discloses a speed reducer in which a reaction sun is held stationary relative to a frame and an output sun is coaxial with the reaction sun. An idler carrier assembly, rotatable relative to the frame about the common axis of the two suns, carries a planet shaft supporting a reaction planet and an output planet for conjoint rotation and in radial alignment, respectively, with the reaction sun and the output sun. Rotation of the idler carrier assembly effects orbiting of the planet shaft and its planets about the common axis of the suns. Endless loop force-transmitting elements connect corresponding suns and planets. Rotary input power is applied to the planet shaft effecting conjoint rotation of planets and orbiting of the planets about the suns' axis. The epicyclic motion of the output planet effects rotation of the output sun.

In the document RU 2520185 is disclosed an articulated gearing comprising drive outer tooth sprocket and driven sprocket and two-row roller chain to transfer first power flow. Two gears fitted on one axle with equal number of teeth engage with said drive and driven sprockets to make the second power flow. Said first power flow comprises two extra rollers fitted on parallel axles and bus supporting aforesaid roller chain. Driven sprocket has inner teeth for engagement with one of gears and roller chain. Drive and driven sprockets are fitted at equal axle base equal to or approximating to zero and feature different number of teeth. Said bus is arranged with clearance to driven sprocket inner surface for passage of roller chain. The transmission of torque from drive shaft to driven shaft at axle base is equal to or approximating to zero.

European Patent Application EP3293415 discloses a solution referring to a common kinematic relationships of planetary gear trains using a sun gear, a planet gear and an outer gear which is internal to the case. In particular it provides an internal ring gear, a driving assembly having the internal ring gear, and an application device employing the driving assembly. The internal ring gear includes at least two ring gears integrally arranged in parallel at an inner surface of a single housing.

Document CA2072043A1 discloses a compact epicyclic gearing falling within the wording of the pre-characterizing portion of claim 1.

Document CN108591405A discloses a precision joint type secondary speed reducer comprising a driving motor, a mounting base, three planetary gears, three linkage shafts, three driven synchronous wheels, a driving synchronous wheel, a double cogged synchronous belt, a central shaft disc and a speed reduction output flange. An inner gear ring is arranged in the middle of the mounting base. The central shaft disc is mounted to the front face of the mounting base through a crossed roller bearing. A middle through hole is formed in the middle of the central shaft disc. The driving motor is mounted to the rear face of the mounting base. The three linkage shafts are evenly distributed on the central shaft disc around the middle through hole. The three planetary gears are mounted to the rear ends of the three linkage shafts correspondingly and engaged with the inner gear ring. The three driven synchronous wheels are mounted at the front ends of the three linkage shafts correspondingly. The driving synchronous wheel is mounted to the front end of an output shaft of the driving motor. The double cogged synchronous belt is connected with the three driven synchronous wheels and the driving synchronous wheel simultaneously. The speed reduction output flange is mounted to the front face of the central shaft disc. In brief, the invention disclosed in document CN108591405A does not have at least one pair of two intermeshing planet gears, one driven by the respective at least one pulley and the other one meshing with the first outer gear.

The main drawback of known epicyclic reduction gears lies in the fact that the gears are multiple with several gearings in motion and therefore noisy as well as bulky when the diameters, for example of the satellites, are wide.

The known epicyclic gears also have the drawback of having limited contact between the teeth of the mutually meshed gearings and therefore without allowing a considerable size reduction.

### DISCLOSURE OF THE INVENTION

The main object of the present invention is to propose a compact epicyclic gearing by virtue of the considerable increase of the mutually meshed portions so as to reduce the axial overall dimensions of the meshed gearings.

Another object is to propose a gearing with multiple gearings having increased stability and reduced noise.

A further object is to propose a gearing having a high reduction ratio.

### BRIEF DESCRIPTION OF THE DRAWINGS

The features of the invention are highlighted hereinafter, with specific reference to the accompanying drawings, in which:
- Figure 1 illustrates an axial sectional view of a first and a second embodiment of the gearing object of the invention in which parts have been removed to better highlight others;
- Figure 2 illustrates a section view according to plane II-II of the gearing of Figure 1;
- Figure 3 illustrates a sectional view according to plane III-III of the gearing of Figure 1;
   Figure 4 illustrates a frontal view of the gearing of Figure 1 in which some parts have been removed to better highlight others;
- Figure 5 illustrates a sectional view according to plane V-V of Figure 4.

### BEST MODE TO CARRY OUT THE INVENTION

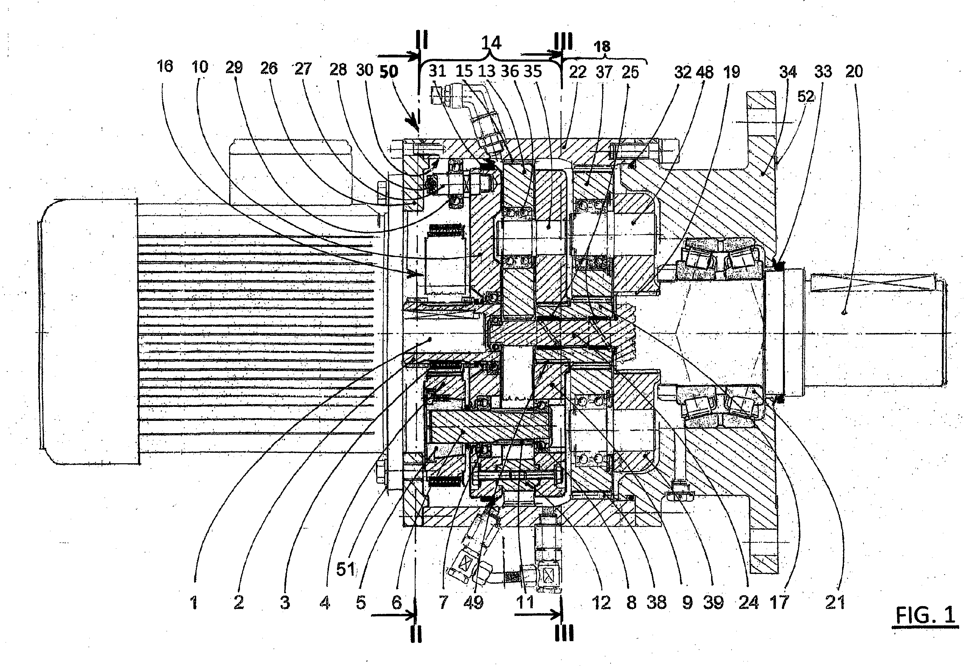

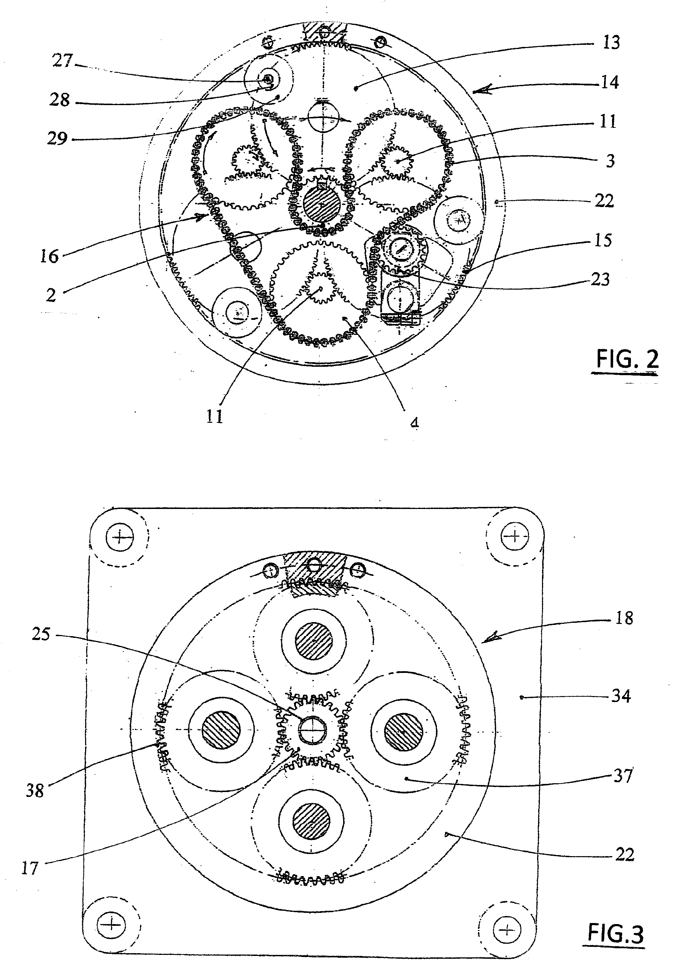

With reference to Figures 1-3, numeral 50 indicates an epicyclic gearing having a first stage 14 essentially comprising an input shaft 1, a pinion 2, three input planet gears 11, a belt or chain 3, three pulleys 4, three first planet gears 13, a first planet carrier 9, a first outer gear 15 and a case 22.

The pinion 2 is keyed on the input shaft 1 on whose teeth the belt or chain 3 engages, constituting a flexible annular gearing 16 which transmits the motion of the pinion 2 to the three pulleys 4 on which the annular gearing 16 is wound. The belt 3 is kept taut by a tightener 23.

Each pulley 4 is keyed by conical sleeves 5 to the end of a respective input planet gear shaft 6 which is rotatably supported by the first planet carrier 9 by means of a first bearing 7 and a second bearing 8.

At the free end of each input planet gear shaft 6 there are toothings which constitute the respective input planet gear 11.

The three pulleys 4 are angularly spaced at 120° with the respective axes on the same circumference. Likewise, the three input planet gears 11 are angularly spaced at 120° and are coaxial with the corresponding pulleys 4.

The first planet carrier 9 supports the three first planet gears 13 by means of a respective pin 35 with the interposition of a bearing 36 and is held in place by means of a shoulder 10 cooperating with a stiffening 12.

Each input planet gear 11 meshes simultaneously with two adjacent first planet gears 13.

Each first planet gear 13 also engages with the first fixed outer gear 15 obtained on the inner wall of the case 22.

The operation of the preferred embodiment of the epicyclic gearing 50 provides that the rotary motion of the input shaft 1 is transferred to each pulley 4 through the synchronous transmission of belt 3, with motion reversal and a first speed reduction.

Then each pulley 4 rotates the input planet gear shaft 6 of the respective input planet gear 11.

The input planet gear shaft 6 axis is parallel to the axis of the input shaft 1 and is assigned to travel along a circumference, dragging in rotation, by means of the respective first planet gear 13, the first planet carrier 9 whose rotation axis is coaxial to the axis of the input shaft 1 and from which it is possible to take a reduced rotary motion with respect to the motion of the input shaft 1.

It should be noted that the rotation of the annular gearing 16 constitutes an important flywheel with a positive impact on the efficiency of the epicyclic gearing 50.

A second embodiment of the epicyclic gearing 50 provides a second stage 18 placed in cascade to the first stage 14 in order to increase the reduction ratio of the rotary motion applied to the input shaft 1.

A sun gear 17, coaxial to the input shaft 1 and meshing with four second planet gears 37, is coupled to the first planet carrier 9 by means of a spline 49. Each of these four second planet gears 37 is rotatably supported by a corresponding rod 48 constrained to a second planet carrier 39.

Each of the four second planet gears 37 is meshed with a second outer gear 38 made on the internal portion of the case 22.

The second planet carrier 39 is coupled with an output shaft 20 coaxial with the input shaft 1 and carrying a reduced tail shaft 24 which rotatably supports the sun gear 17 through two bushes or slides 25.

The shaft 20 is axially controlled and tightly supported at the output by a single double-gears taper roller bearing 21 and by the same output flange 34.

The case 22 is provided with an input flange 26 and an output flange 34 so creating a chamber having a first and a second compartment.

The first compartment is comprised between the input flange 26 and the first planet carrier 9 and encloses the annular gearing 16 so as to keep it isolated by means of a lip seal 31 interposed between the inner portion 30 of the case 22 and the shoulder 10 for supporting the first planet carrier 9.

The second compartment is comprised between the first compartment, the case 22, the output shaft 20 and the output flange 34. The second compartment contains the first stage 14 and the second stage 18 of the epicyclic gearing 50 so keeping them into a lubricant bath by virtue of the sealing of the lip seal 31 and of a front seal 33, interposed between the output shaft 20 and the output flange 34, and by an o-ring 32, interposed between the output flange 34 and the inner portion 30 of the case 22.

The plurality of meshing points between the input planet gears 11 and the respective first planet gears 13 does not have hyperstatic problems due to the right relationship between the tensioning of the belt 3 by the tightener 23 and the appropriate freedom degree of the bearings, first 7 and second 8, in the respective housing.

In a stage of a known epicyclic gearing, the sun gear is positioned at the gearing centre and is engaged in only three points with the respective planets arranged at 120° around it.

In the first stage 14 of the epicyclic gearing 50, the three input planet gears 11 are radially decentralized and are each interposed between two respective first planet gears 13 with a doubling of the grip points with respect to the corresponding stage of the known gearing.

Each of the gripping points consists of two teeth of the input planet gear 11 which are always conjugated with two teeth of the respective first planet gear 13 due to the gear ratio always higher than 1, i.e. εα>1 according to UNI 8862 standard.

This arrangement is made possible by the flexible annular gearing 16 which, starting from the pinion 2 keyed onto the input shaft 1, distributes the drive torque to the three pulleys 4 and, with a first speed reduction, to the integral input planet gears 11. These latter engage externally with the respective first planet gears 13 and with the contribution of the first fixed outer gear 15 put the first planet carrier 9 into rotary motion, reinforced by the flywheel effect impressed by the pulleys 4, with the impact of the reduction process onto the first planet carrier 9 and transmission to the second stage 18.

The axes of the three input planet gears 11 and the axes of the three pulleys 4 trace the same circumference and therefore travel at the same angular speed ω corresponding to a peripheral speed of less than one meter per second.

This particular conformation of the first stage 14, compared to the known three-stage epicyclic gearing, reduces the acoustic impact by over 50% and improves the efficiency by about 2% compared to the efficiency of 91% of the known epicyclic gearings.

In known epicyclic gearings, the dynamic stress is calculated as σFLim 1000 Nmm² * 0,7 = 700 Nmm² with reference to case hardening steel 17 NI CR MO 4-6 - DIN 17210, while the dynamic bending stress of the epicyclic gearing 50 is 10% reduced since σFLim 1000 Nmm² * 0,8 = 800 Nmm² due to the effect of the grip in two points at 120° on each first planet gear 13, considered idler gear, of two input planet gears 11.

The tangential force, in the known epicyclic gearings with three planet gears and one sun gear, taken in a single point is Ft/3, while in the first stage 14 the tangential force is Ft/6 as there are six grip points between the input planet gears 11 and the first planet gears 13.

Known single-sun epicyclic gearings reach a reduction ratio of at most 1:6, while in the first stage 14 the reduction ratio is 1:12 or 1:12,5 by virtue of the 12 teeth engaged between the input planet gears 11 and the first planet gears 13 maintaining the character of torque reducer.

The overall stabilization of the epicyclic gearing 50, in the radial and axial direction, is guaranteed by the reduced tail shaft 24 of the output shaft 20 and by the perfect alignment with the input shaft 1.

The controlled flotation of the entire epicyclic gearing 50 is controlled by the bushes 25 mounted inside the sun gear 17 and contained downstream in an anti-sliding function with respect to the input flange 26, by the supporting balls 27 mounted on the fixing pins 28 of the closed curved rolling bearings 29.

These rolling bearings 29 are placed at an equal radial distance from the axis of the input shaft 1 and are mounted on the shoulder 10 of the first planet carrier 9. During the operation of the epicyclic gearing 50, the rolling bearings 29 also move with rototranslatory motion at already reduced speed along the internal circumference of the case 22 thus contributing to the radial equilibrium of the epicyclic gearing 50 in the operating phase.

The two embodiments of the gearing 50 just described provide for the use of the gearing as a reducer in which the driving force (rotary motion) is applied to the input shaft 1 and the reduced motion is available at the output shaft 20.

A variant of use of the two embodiments of the epicyclic gearing 50 provides that it is used as a multiplier in which the input rotary motion is applied to the output shaft 20 and the multiplied motion is taken from the input shaft 1.

It is known that a three-stage epicyclic or reduction gearing, with a reduction ratio of 1:121 using a three-phase motor with 7,5 kw at 1460 rpm and a torque of 49 Nm, has an axial overall dimension of 527 mm between the input and the output face of the gear train itself.

The overall dimensions of the epicyclic gearing 50, object of the present invention, have an axial overall dimension of 370 mm between an inner face 51 of the input flange 26 and an outer face 52 of the output flange 34. Therefore, the axial overall dimensions between the gearing 50 and the known one is reduced by about 30%.

It should also be noted that the output flange 34 can be square or round shaped based on the type of installation required.

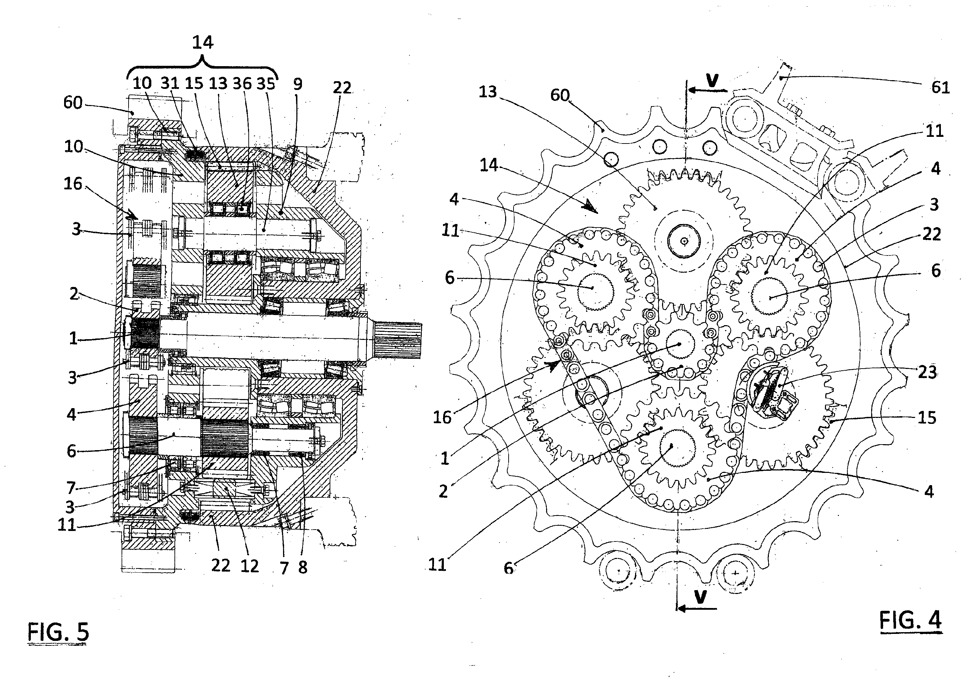

Figures 4 and 5 illustrate a third embodiment of the compact epicyclic gearing 50 which is single-stage and comprises the same annular gearing 16 of the first and second embodiments.

The first planet carrier 9 is essentially connected by means of three stiffenings 12 to the shoulder 10 which has on its peripheral edge a track wheel 60 on which, for example, a track 61 engages.

Between the shoulder 10 and the case 22 there is the leap seal 31 which avoids the flow communication between the inside and outside of the case 22 and vice versa.

In this third embodiment, the motion output from the gearing 50 is from the shoulder 10 to which the track wheel 60 is constrained, for example of a not showed but known tracked vehicle.

The main advantage of the present invention is to provide a compact epicyclic gearing obtained thanks to the considerable increase in the number and surfaces of the mutually meshed portions so as to reduce the axial development of the meshed gearings.

In particular, a first axial compression is obtained as a result of the particular configuration of the first stage of the epicyclic gearing with the multiple sun gears off-cantered with respect to the axis of the input shaft and which are moved by a flexible annular gearing acting within the axial overall dimensions of the input shaft itself.

Another advantage consists in providing a gearing with multiple gearings having increased stability and reduced noise.

A further advantage is that of providing a gearing having a high reduction ratio.

## Claims

1. Compact epicyclic gearing having a first stage (14) comprising at least one input shaft (1) kinematically connected to at least one input planet gear (11) engaged with at least one first planet gear (13) rotatably supported by a first planet carrier (9) and meshed with a first outer gear (15) internal to a case (22) of the epicyclic gearing (50), the latter (50) being **characterized in that** the at least one input planet gear (11) is joined to a respective input planet gear shaft (6), at one end thereof a respective pulley (4) is keyed on which is engaged an annular belt or chain (3) of an annular gearing (16) which is engaged to a pinion (2) keyed on the input shaft (1) whose rotation is transmitted by means of the belt or chain (3) to the at least one pulley (4) which sets in rotation the relative input planet gear shaft (6) of the at least one input planet gear (11), with the input planet gear shaft (6) axis parallel to the axis of the input shaft (1) and rotating along a circumference, dragging in rotation, by means of the at least one first planet gear (13), the first planet carrier (9) whose rotation axis is coaxial to the input shaft (1) axis.

2. Gearing according to claim 1 **characterized in that** the at least one input planet gear (11) are three in number, angularly spaced at 120° with the relative axes on the same circumference.

3. Gearing according to claim 2 **characterized in that** the annular gearing (16) comprises a loop closed belt (3) which connects three pulleys (4) on one side and the pinion (2) and at least one tightener (23) of the belt (3) on the other side.

4. Gearing according to any of the previous claims **characterized in that** each pulley (4) is coupled by conical sleeves (5) on the relative input planet gear shaft (6) rotatably supported by the first planet carrier (9) on the case (22) by means of first (7) and second (8) bearings.

5. Gearing according to any of the preceding claims **characterized in that** the first planet carrier (9) supports the relative first planet gear (13) by means of a pin (35) interposed by a bearing (36) and said first planet carrier (9) is supported in the case (22) by virtue of a shoulder (10) cooperating with a stiffening (12).

6. Gearing according to any of the preceding claims **characterized in that** the at least one input planet gear (11) meshes simultaneously with two adjacent first planet gears (13).

7. Gearing according to any of the preceding claims **characterized in that** the first planet carrier (9) is coupled to a sun gear (17), coaxial with the input shaft (1), of a second stage (18) of the epicyclic gearing (50) comprising at least one second planet gear (37) which is rotatably supported by a second planet carrier (39) and which is meshed with a second outer gear (38) internal to the case (22).

8. Gearing according to claim 7 **characterized in that** an output shaft (20) coaxial with the input shaft (1) is coupled to the second planet carrier (39) and said output shaft (20) bears a reduced tail shaft (24) which rotatably supports the sun gear (17) by means of at least one bush (25).

9. Gearing according to claim 8 **characterized in that** the case (22) has an input flange (26) and an output flange (34) to create a chamber having:
- a first compartment, comprised between the input flange (26) and the first planet carrier (9), in which the annular gearing (16) is kept isolated by a lip seal (31) which is placed between the case (22) inner portion (30) and the shoulder (10) bearing the first planet carrier (9);
- a second compartment, comprised between the first compartment, the case (22), the output shaft (20) and the output flange (34), in which first stage (14) and second stages (18) of the epicyclic gearing (50) are maintained in a lubricant bath by means of the lip seal (31) and of a front seal (33), interposed between the output shaft (20) and the output flange (34), and by an O-ring (32) interposed between the output flange (34) and the inner portion (30) of the case (22).

10. Gearing according to claim 2 **characterized in that** the three input planet gears (11) and the three first planet gears (13) are engaged in six spots and so engaging twelve teeth.

11. Gearing according to any of the previous claims **characterized in that** the at least one input planet gear (11) and the at least one first pulley (4) describe the same circumference and rotate at the same angular velocity.

12. Gearing according to any of the preceding claims **characterized in that** it has an axial dimension of 370 mm comprised between an inner face (51) of the input flange (26) and an outer face (52) of the output flange (34).

13. Use of the compact epicyclic gearing (50) according to any one of the preceding claims **characterized in that** the epicyclic gearing (50) is an overgear when the output shaft (20) becomes the input shaft of the epicyclic gearing (50) and the input shaft (1) becomes output shaft of the epicyclic gearing (50).

14. Gearing according to claim 5 or claim 6 **characterized in that** the first planet carrier (9) is connected to a shoulder (10) to which a track wheel (60) is fixed.

## Patentansprüche

1. Kompaktes Planetenrad bzw. Planetengetriebe mit einem ersten Abschnitt (14), der zumindest eine erste Eingangswelle (1) umfasst, die kinematisch mit mindestens einem Eingangsplanetenrad (11) verbunden ist, das mit mindestens einem ersten Planetenrad (13) in Eingriff steht, das drehbar von einem ersten Planetenträger (9) getragen ist und mit einem ersten Außenrad (15) in Eingriff steht innerhalb eines Gehäuses (22) des Planetengetriebes (50), und Letzteres (50) ist **dadurch gekennzeichnet, dass** das mindestens eine Eingangsplanetenrad (11) mit einer entsprechenden Eingangsplanetenradwelle (6) verbunden ist, an einem Ende davon ist eine entsprechende Riemenscheibe (4) eingekeilt, an der ein/e ringförmige/r Riemen oder Kette (3) eines ringförmigen Getriebes (16) eingreift, das in ein Ritzel (2) eingreift, das in der Eingangswelle (1) eingekeilt ist, deren Drehung über den Riemen oder die Kette (3) auf die mindestens eine Riemenscheibe (4) übertragen wird, die die entsprechende Eingangsplanetenradwelle (6) des mindestens einen Eingangsplanetenrads (11) in Drehung versetzt, wobei die Achse der Eingangsplanetenradwelle (6) parallel zu der Achse der Eingangswelle (1) verläuft und sich entlang eines Kreisumfangs dreht, und bei Drehung mittels des mindestens einen ersten Planetenrad (13) den ersten Planetenträger (9) mitschleppt, dessen Drehachse koaxial zu der Achse der Eingangswelle (1) verläuft.

2. Getriebe gemäß Anspruch 1, **dadurch gekennzeichnet, dass** drei an der Zahl des mindestens einen Eingangsplanetenrads (11) bereitgestellt sind, winklig beabstandet bei 120° mit den relativen Achsen auf dem gleichen Kreisumfang.

3. Getriebe gemäß Anspruch 2, **dadurch gekennzeichnet, dass** das ringförmige Getriebe (16) einen Endlos-Riemen (3) umfasst, der die drei Riemenscheiben (4) an einer Seite und das Getrieberad (2) und mindestens einen Spanner (23) des Riemens (3) auf der anderen Seite verbindet.

4. Getriebe gemäß einem der vorhergehenden Ansprüche, **dadurch gekennzeichnet, dass** jede Riemenscheibe (4) mittels konischer Hülsen (5) auf der relativen Eingangsplanetenradwelle (6) gekoppelt ist, die drehbar getragen ist von dem ersten Planetenträger (9) auf dem Gehäuse (22) mittels erster (7) und zweiter (8) Lager.

5. Getriebe gemäß einem der vorhergehenden Ansprüche, **dadurch gekennzeichnet, dass** der erste Planetenträger (9) das entsprechende erste Planetenrad (13) mittels eines Stifts (35) trägt, der mittels eines Lagers dazwischen angeordnet ist und der erste Planetenträger (9) wird in dem Gehäuse (22) mittels einer Schulter (10) getragen, die mit einer Versteifung (12) zusammenwirkt.

6. Getriebe gemäß einem der vorhergehenden Ansprüche, **dadurch gekennzeichnet, dass** das mindestens eine Eingangsplanetenrad (11) gleichzeitig mit zwei anliegenden ersten Planetenräder (13) in Eingriff steht.

7. Getriebe gemäß einem der vorhergehenden Ansprüche, **dadurch gekennzeichnet, dass** der erste Planetenträger (9) mit einem koaxial zu der Eingangswelle (1) angeordneten Sonnenrad (17) eines zweiten Abschnitts (18) des Planetengetriebes (50) gekoppelt ist, umfassend mindestens ein zweites Planetenrad (37), das drehbar von einem zweiten Planetenträger (39) getragen ist und welches in ein zweites Außenrad (38) eingreift, das innenliegend von dem Gehäuse (22) angeordnet ist.

8. Getriebe gemäß Anspruch 7, **dadurch gekennzeichnet, dass** eine koaxial zu der Eingangswelle (1) angeordnete Ausgangswelle (20) mit dem zweiten Planetenträger (39) gekoppelt ist und die Ausgangswelle (20) trägt eine reduzierte Endwelle (24), die das Sonnenrad (17) mittels mindestens einer Buchse (25) drehbar trägt.

9. Getriebe gemäß Anspruch 8, **dadurch gekennzeichnet, dass** das Gehäuse (22) einen Eingangsflansch (26) und einen Ausgangsflansch (34) aufweist, um eine Kammer zu erzeugen, die aufweist:
- ein erstes Abteil, eingeschlossen zwischen dem Eingangsflansch (26) und dem ersten Planetenträger (9), in der das ringförmige Getriebe (16) isoliert durch eine Lippendichtung (31) gehalten ist, die zwischen dem inneren Bereich (30) des Gehäuses (22) und der den ersten Planetenträger (9) tragenden Schulter (10) angeordnet ist;
- ein zweites Abteil, eingeschlossen zwischen dem ersten Abteil, dem Gehäuse (22), der Ausgangswelle (20) und dem Ausgangsflansch (34), in dem der erste Abschnitt (14) und der zweite Abschnitt (18) des Planetengetriebes (50) in einem Schmiermittelbad mittels der Lippendichtung (31) und einer zwischen der Ausgangswelle (20) und dem Ausgangsflansch (34) angeordneten Frontdichtung (33) gehalten werden, und mittels eines zwischen dem Ausgangsflansch (34) und dem Innenbereich (30) des Gehäuses (22) angeordneten O-Rings (32).

10. Getriebe gemäß Anspruch 2, **dadurch gekennzeichnet, dass** die drei Eingangsplanetenräder (11) und die ersten drei Planetenräder (13) an sechs Stellen in Eingriff genommen sind und somit an zwölf Zähnen eingreifen.

11. Getriebe gemäß einem der vorhergehenden Ansprüche, **dadurch gekennzeichnet, dass** das mindestens eine Eingangsplanetenrad (11) und die mindestens eine erste Riemenscheibe (4) den gleichen Kreisumfang beschreiben und sich mit der gleichen Winkelgeschwindigkeit drehen.

12. Getriebe gemäß einem der vorhergehenden Ansprüche, **dadurch gekennzeichnet, dass** es eine axiale Ausdehnung von 370 mm aufweist, eingeschlossen zwischen einer Innenfläche (51) des Eingangsflansches (26) und einer Außenfläche (52) des Ausgangsflansches (34).

13. Verwendung des kompakten Planetengetriebes (50) gemäß einem der vorhergehenden Ansprüche, **dadurch gekennzeichnet, dass** das Planetengetriebe (50) ein Übersetzungsgetriebe ist, wenn die Ausgangswelle (20) zu der Eingangswelle des Planetengetriebes (50) wird und die Eingangswelle (1) zu der Ausgangswelle des Planetengetriebes (50) wird.

14. Getriebe gemäß Anspruch 5 oder 6, **dadurch gekennzeichnet, dass** der erste Planetenträger (9) mit einer Schulter (10) verbunden ist, an der ein Laufrad (60) befestigt ist.

## Revendications

1. - Train épicycloïdal compact ayant un premier étage (14) comprenant au moins un arbre d'entrée (1) relié cinématiquement à au moins un satellite d'entrée (11) engagé avec au moins un premier satellite (13) supporté en rotation par un premier porte-satellites (9) et engrené avec une première roue dentée externe (15) interne à un boîtier (22) du train épicycloïdal (50), ce dernier (50) étant **caractérisé par le fait que** l'au moins un satellite d'entrée (11) est réuni à un arbre de satellite d'entrée respectif (6), à une extrémité de celui-ci est clavetée une poulie (4) sur laquelle est engagée une courroie ou chaîne annulaire (3) d'un engrenage annulaire (16) qui est engagée à un pignon (2) claveté sur l'arbre d'entrée (1) dont la rotation est transmise au moyen de la courroie ou chaîne (3) à ladite au moins une poulie (4) qui met en rotation l'arbre de satellite d'entrée respectif (6) de l'au moins un satellite d'entrée (11), l'axe de l'arbre de satellite d'entrée (6) étant parallèle à l'axe de l'arbre d'entrée (1) et tournant sur une circonférence, entraînant en rotation, au moyen de l'au moins un premier satellite (13), le premier porte-satellites (9) dont l'axe de rotation est coaxial à l'axe de l'arbre d'entrée (1).

2. - Train selon la revendication 1, **caractérisé par le fait que** l'au moins un satellite d'entrée (11) est au nombre de trois, espacés angulairement à 120° avec les axes respectifs sur la même circonférence.

3. - Train selon la revendication 2, **caractérisé par le fait que** l'engrenage annulaire (16) comprend une courroie à boucle fermée (3) qui relie trois poulies (4) d'un côté et le pignon (2) et au moins un tendeur (23) de la courroie (3) de l'autre côté.

4. - Train selon l'une quelconque des revendications précédentes, **caractérisé par le fait que** chaque poulie (4) est couplée par des manchons coniques (5) sur l'arbre de satellite d'entrée respectif (6) supporté en rotation par le premier porte-satellites (9) sur le boîtier (22) au moyen de premier (7) et second (8) paliers.

5. - Train selon l'une quelconque des revendications précédentes, **caractérisé par le fait que** le premier porte-satellites (9) supporte le premier satellite respectif (13) au moyen d'une broche (35) avec interposition d'un palier (36) et ledit premier porte-satellites (9) est supporté dans le boîtier (22) en vertu d'un épaulement (10) coopérant avec un raidisseur (12).

6. - Train selon l'une quelconque des revendications précédentes, **caractérisé par le fait que** l'au moins un satellite d'entrée (11) s'engrène simultanément avec deux premiers satellites (13) adjacents.

7. - Train selon l'une quelconque des revendications précédentes, **caractérisé par le fait que** le premier porte-satellites (9) est couplé à une roue solaire (17), coaxiale à l'arbre d'entrée (1), d'un second étage (18) du train épicycloïdal (50) comprenant au moins un second satellite (37) qui est supporté en rotation par un second porte-satellites (39) et qui est engrené avec une seconde roue dentée extérieure (38) interne au boîtier (22).

8. - Train selon la revendication 7, **caractérisé par le fait qu'**un arbre de sortie (20) coaxial à l'arbre d'entrée (1) est couplé au second porte-satellites (39) et ledit arbre de sortie (20) porte un arbre de queue réduit (24) qui supporte en rotation la roue solaire (17) au moyen d'au moins une chemise(25).

9. - Train selon la revendication 8, **caractérisé par le fait que** le boîtier (22) a un flasque d'entrée (26) et un flasque de sortie (34) pour créer une chambre ayant :
- un premier compartiment, compris entre le flasque d'entrée (26) et le premier porte-satellites (9), dans lequel l'engrenage annulaire (16) est maintenu isolé par un joint à lèvre (31) qui est placé entre la partie intérieure (30) du boîtier (22) et l'épaulement (10) portant le premier porte-satellites (9) ;
- un second compartiment, compris entre le premier compartiment, le boîtier (22), l'arbre de sortie (20) et le flasque de sortie (34), dans lequel le premier étage (14) et le second étage (18) du train épicycloïdal (50) sont maintenus dans un bain de lubrifiant au moyen du joint à lèvre (31) et d'un joint avant (33), interposé entre l'arbre de sortie (20) et le flasque de sortie (34), et par un joint torique (32) interposé entre le flasque de sortie (34) et la partie intérieure (30) du boîtier (22).

10. - Train selon la revendication 2, **caractérisé par le fait que** les trois satellites d'entrée (11) et les trois premiers satellites (13) sont engagés en six points et engagent ainsi douze dents.

11. - Train selon l'une quelconque des revendications précédentes, **caractérisé par le fait que** l'au moins un satellite d'entrée (11) et l'au moins une première poulie (4) décrivent la même circonférence et tournent à la même vitesse angulaire.

12. - Train selon l'une quelconque des revendications précédentes, **caractérisé par le fait qu'**il a une dimension axiale de 370 mm comprise entre une face interne (51) du flasque d'entrée (26) et une face externe (52) du flasque de sortie (34).

13. - Utilisation du train épicycloïdal compact (50) selon l'une quelconque des revendications précédentes, **caractérisée par le fait que** le train épicycloïdal (50) est un multiplicateur lorsque l'arbre de sortie (20) devient l'arbre d'entrée du train épicycloïdal (50) et l'arbre d'entrée (1) devient l'arbre de sortie du train épicycloïdal (50).

14. - Train selon la revendication 5 ou la revendication 6, **caractérisé par le fait que** le premier porte-satellites (9) est relié à un épaulement (10) auquel une roue de chenille (60) est fixée.
